**Europäisches Patentamt**

**European Patent Office**

**Office européen des brevets**

(19)

(11) Veröffentlichungsnummer: **0 222 314**
**B1**

(12) **EUROPÄISCHE PATENTSCHRIFT**

(45) Veröffentlichungstag der Patentschrift:
27.12.90

(51) Int. Cl.⁵: **F16K 27/06**, F16K 5/06

(21) Anmeldenummer: 86115337.7

(22) Anmeldetag: 05.11.86

(54) Rohrarmatur.

(30) Priorität: 15.11.85 DE 3540514

(43) Veröffentlichungstag der Anmeldung:
20.05.87 Patentblatt 87/21

(45) Bekanntmachung des Hinweises auf die Patenterteilung:
27.12.90 Patentblatt 90/52

(84) Benannte Vertragsstaaten:
AT CH DE ES FR GB IT LI NL SE

(56) Entgegenhaltungen:
DE-A- 3 134 205
DE-U- 7 108 823

(73) Patentinhaber: Klinger AG, Baarerstrasse 10,
CH-6301 Zug(CH)

(72) Erfinder: Wirz, Peter, im Juch 733, CH-5726 Unterkulm
(Aargau)(CH)

(74) Vertreter: Sparing Röhl Henseler Patentanwälte
European Patent Attorneys, Rethelstrasse 123,
D-4000 Düsseldorf 1(DE)

## Beschreibung

Die Erfindung betrifft eine Rohrarmatur, etwa ein Rückschlagventil, eine elektrische Trennstelle oder ähnliche durchströmte Einrichtung, insbesondere ein Absperrorgan, mit mindestens einem rohrförmigen, vorzugsweise aus Kohlenstoffstahl bestehenden Gehäuseendteil, in das ein Anschlußstück eingesetzt ist.

Bei derartigen Rohrarmaturen ist es bekannt, die Anschlußstücke mit Preßsitz einzuschieben und anschließend mit einem Rohrteil durch Schweißen zu verbinden. Bei derartigen Armaturen sind Schweißnähte od. dgl. nicht nur an sich Kostenfaktoren, sondern - weil infolgedessen häufig auf Kontrollen verzichtet wird - auch Gefahrenquellen.

Ferner ist es aus der DE-A-31 34 205 bekannt, bei einer Rohrarmatur mit einem dünnwandigen, rohrförmigen Gehäuseendteil dieses mit einem Anschlußstück über eine Verbindungshülse zu verbinden, wobei das Anschlußstück und die Verbindungshülse über Schrumpfsitz verbunden sind, während die Verbindungshülse mit Preßsitz in die Eindrehung des Gehäuses eingebracht ist. Zusätzlich ist hierbei die aus Anschlußstück und Verbindungshülse gebildete, eine elektrische Trennstelle darstellende Einheit mit dem Gehäuse verschweißt. Bei der Herstellung von Schrumpf- und Preßsitzen findet üblicherweise keine Dehnung über die gesamte Wanddicke bis zur Streckgrenze statt. - Ferner ist es hieraus bekannt, ein Gewindestück durch plastische Verformung in Form einer Einrollung einer Sicke sowie einer Umbördelung am freien Ende des rohrförmigen Gehäuseteils festzuhalten oder eine Verbindung derart herzustellen, daß der Durchmesser einer Hülse nach Einschieben eines Rohrstutzens mechanisch in einer Preßform reduziert wird. - Hieraus ist jedoch nicht entnehmbar, wie man Rohrarmaturen möglichst einfacher Bauart für niedrige Betriebsanforderungen und mit minimalen Fabrikationskontrollen herstellen kann, deren Gehäuse aus Elementen einfach zusammenbaubar sind.

Diese Aufgabe wird dadurch gelöst, daß selbst bei Summierung der ungünstigsten Toleranzen beim Einpressen die Wand des Gehäuseendteils im Einsetzbereich des Anschlußstücks über die gesamte Wandstärke mindestens über die Streckgrenze, aber nicht mehr als 5% gedehnt ist, so daß für die das Anschlußstück festhaltende Flächenpressung die maximalen elastischen Rückfederkräfte des gesamten Rohrquerschnitts zur Verfügung stehen.

Hierbei wird davon Gebrauch gemacht, daß unabhängig von der Größe plastischer Verformungen eines metallischen Werkstoffs je die gesamte Rückfederung zur Verfügung steht. Auf diese Weise ist gesichert, daß nach dem Einpressen des Anschlußstückes die gesamten elastischen Rückfederkräfte zum kraftschlüssigen Festhalten des Anschlußstückes zur Verfügung stehen, solange das toleranzbedingt geringste Übermaß zu einer plastischen Verformung führt und somit alle Toleranzvarianten im plastischen Bereich liegen. Die elastischen Rückfederkräfte nehmen allerdings mit steigenden Temperaturen ab, was zu berücksichtigen ist. Je nach Größe der aufzunehmenden äußeren Kräfte und der Innendruckkräfte muß dann die Länge der zusammenwirkenden Kontaktflächen gewählt werden. Die Fabrikationskontrolle ist besonders einfach, weil es hierzu ausreicht, die nötige Einpreßkraft zu kontrollieren, die als Maß für die übertragbaren Kräfte verwendet werden kann.

Aus Sicherheitsgründen sollen die Verformungen im plastischen Bereich klein sein, weil die resultierenden Dehnungen nicht in den Bereich der Bruchdehnung kommen sollen. Vorteilhaft ist deshalb bei Verwendung eines Gehäuseendteils aus Kohlenstoffstahl, dessen Bruchdehnung etwa bei 20% liegt, die durch plastische Verformung hervorgerufene Dehnung nicht größer als 5% zu wählen.

Es ist auch möglich, daß zwischen Anschlußstück und Gehäuseendteil eine isolierende Zwischenschicht vorgesehen ist, insbesondere in Form einer elektrisch isolierenden Beschichtung auf der vorteilhaft zylindrischen Außenfläche des Anschlußstückes. Auf diese Weise ergibt sich eine einfach ausgebildete elektrische Isolierstelle.

Zur Abdichtung zwischen Gehäuseteil und Anschlußstück kann bei sehr niedrigen Beanspruchungen das in irgendeiner Form auf jeden Fall benötigte Schmiermittel dienen, sowie auch in Nuten einlegbare Dichtungen, z.B. ein O-Ring. Vorteilhaft ist zur Abdichtung ein Elastomerring vorgesehen, der zwischen Anschlußstück und Gehäuseinnenwand eingeklemmt ist, weil beim Einpressen des Anschlußstückes seine Lage relativ zum Gehäuseteil exakt eingestellt und damit die optimale Pressung des Elastomerringes gegen die Wand des Gehäuseteils genau eingehalten werden kann. Wenn der Elastomerring auch die Abdichtung gegen ein Schaltglied bildet, ist bei kontrollierter Relativlage des Anschlußstückes auch die Pressung an das Schaltglied und damit auch das notwendige Schaltmoment genau einhaltbar.

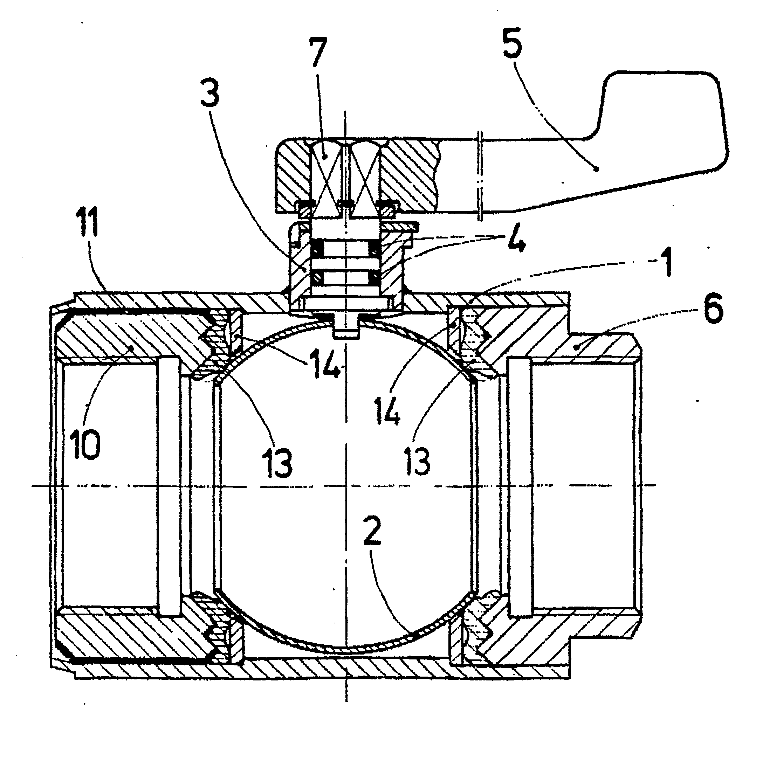

Ein Ausführungsbeispiel wird nachstehend anhand der beigefügten Abbildung näher erläutert, die einen Kugelhahn im Schnitt darstellt.

Der Kugelhahn besteht aus einem Gehäuse 1, das aus einem Rohr gefertigt ist. In diesem ist als Schaltglied eine Hohlkugel 2 angeordnet, die durch einen Hahngriff 5 schaltbar ist, dessen Bewegung über einen Bewegerbolzen 7 auf die Kugel 2 übertragen wird. Der Bewegerbolzen 7 ist in einem mit dem Gehäuse 1 verschweißten Ansatz 3 gelagert und dort durch O-Ringe abgedichtet. In die ausgedrehten Gehäuseendteile ist ein Abschlußring 14 und eine Kautschukdichtung 13 eingeschoben, die durch in die Gehäuseendteile eingepreßte Anschlußstücke 6 bzw. 10 in der richtigen Position gehalten werden.

Das Anschlußstück 10 weist auf der zylindrischen Außenfläche eine elektrisch isolierende Beschichtung auf, die nach ihrer Aufbringung überschliffen worden ist. Die zylindrischen Außenflächen beider Anschlußstücke weisen im Vergleich zur Ausdrehung der rohrförmigen Gehäuseendteile ein solches Übermaß auf, das selbst bei Summierung der ungünstigsten Toleranzen beim Einpressen eine Aufweitung erfolgt, die für die ganze Rohrwand mindestens an oder über der Streckgrenze liegende Beanspruchungen ergibt. Auf diese Weise ist gesichert, daß die Anschlußstücke mit einer Flächenpressung festgehalten sind, welche der max. elastischen Dehnung entspricht. Bei einem Nennmaß von 45 mm für den Durchmesser der zylindrischen Außenfläche der Anschlußstücke bzw. des Innendurchmessers der rohrförmigen Gehäuseendteile und einem Außendurchmesser von 50 mm ergibt sich bei einem Rohrmaterial von St 35 zur Erreichung der Streckgrenze über die gesamte Wanddicke ein Übermaß von etwa 0,06 mm (~0,1% Dehnung). Für den Fall der Summierung der ungünstigsten Toleranzen (IT11/IT8) ergibt sich eine zusätzlich erforderliche Ausweitung von etwa 0,2 mm (etwa 0,5% Dehnung). Für den angenommenen Rohrwerkstoff beträgt die Bruchdehnung 25%, woraus hervorgeht, daß die durch das Einpressen hervorgerufene Beanspruchung des Rohrwerkstoffs auf jeden Fall sehr gering ist.

Die Gehäuseendteile wurden beim vorliegenden Beispiel ausgedreht, um mit der sich ergebenden Schulter am inneren Ende der Ausdrehung einen Anschlag für den Abstützring 14 zu bilden. Unter der Annahme eines anderen Abdichtsystems, z.B. eines O-Ringes an der zylindrischen Außenfläche, könnte auch ein Rohr ohne Ausdrehung verwendet werden. Bei einem nahtlosen Präzisionsrohr nach DIN 2391 ist bei einem Innendurchmesser von 45 mm die Toleranz ± 0,2 mm, was dann eine ebenfalls noch sehr geringe Gesamtdehnung von 1,1 % ergibt, um alle Toleranzschwankungen im plastischen Bereich aufzunehmen.

Die Länge der zylindrischen Außenfläche der Anschlußstücke muß dabei so gewählt sein, daß sich bei Verwendung eines Schmiermittels zum Einpressen die den Betriebsanforderungen nötigen äußeren Kräfte zwischen den beiden Hahnteilen sicher übertragen werden.

Das Einpressen der Anschlußstücke 6 bzw. 10 muß so tief erfolgen, daß die Kautschukdichtung 13 unter der richtigen Spannung gehalten wird, die eine Abdichtung zwischen Anschlußstück einerseits zum Gehäuseendteil, andererseits zur Hohlkugel sicherstellt.

Ein derartiger Kugelhahn weist also bei einfachem Aufbau zwischen Anschlußstücken und Gehäuse eine sichere Verbindung auf, die während des Einpreßvorgangs zuverlässig unter Kontrolle gehalten werden kann.

## Patentansprüche

1. Rohrarmatur, insbesondere Absperrorgan, mit mindestens einem rohrförmigen, vorzugsweise aus Kohlenstoffstahl bestehenden Gehäuseendteil, in das ein Anschlußstück (6, 10) eingesetzt ist, dadurch gekennzeichnet, daß selbst bei Summierung der ungünstigsten Toleranzen beim Einpressen die Wand des Gehäuseendteils im Einsetzbereich des Anschlußstücks über die gesamte Wandstärke mindestens über die Streckgrenze, aber nicht mehr als 5% gedehnt ist, so daß für die das Anschlußstück (6, 10) festhaltende Flächenpressung die maximalen elastischen Rückfederkräfte des gesamten Rohrquerschnitts zur Verfügung stehen.

2. Rohrarmatur nach Anspruch 1, dadurch gekennzeichnet, daß zwischen Anschlußstück (6, 10) und Gehäuseendteil eine isolierende Zwischenschicht (11) vorgesehen ist, insbesondere in Form einer elektrisch isolierenden Beschichtung auf der vorteilhaft zylindrischen Außenfläche des Anschlußstücks (6, 10).

3. Rohrarmatur nach Anspruch 1 oder 2, dadurch gekennzeichnet, daß zur Abdichtung ein Elastomerring (13) zwischen Anschlußstück (6, 10) und Gehäuseinnenwand eingeklemmt ist.

4. Rohrarmatur nach Anspruch 3, dadurch gekennzeichnet, daß der Elastomerring (13) auch die Abdichtung gegen ein Schaltglied (2) bildet.

## Claims

1. Pipe fitting, especially a shut-off device, having at least one tubular housing end part, preferably consisting of carbon steel, into which a connecting piece (6, 10) is inserted, characterised in that even with an accumulation of unfavourable tolerances, during the pressing-in operation the wall of the housing end part in the region of insertion of the connecting piece is stretched over the entire wall thickness at least beyond the apparent yielding point, but not more than 5%, so that the maximum elastic return forces of the entire pipe cross-section are available for the surface pressure retaining the connecting piece (6, 10).

2. Pipe fitting according to Claim 1, characterised in that between the connecting piece (6, 10) and the housing end part an insulating intermediate layer (11) is provided, especially in the form of an electrically insulating coating on the preferably cylindrical outer surface of the connecting piece (6, 10).

3. Pipe fitting according to Claim 1 or 2, characterised in that, for sealing, an elastomer ring (13) is clamped in between the connecting piece (6, 10) and the inner wall of the housing.

4. Pipe fitting according to Claim 3, characterised in that the elastomer ring (13) also forms the seal with respect to a switching member (2).

## Revendications

1. Robinet de tuyauterie, en particulier organe de fermeture, ayant au moins une extrémité de son corps, de forme tubulaire, de préférence fabriqué en acier au carbone, dans lequel un raccord (6, 10) est emmanché, caractérisé en ce que, même en additionnant les tolérances défavorables lors de l'enfoncement, la paroi de l'extrémité du corps dans la zone d'emmanchement du raccord se dilate, sur toute l'épaisseur de la paroi, au moins le long de la zone de dilatation, mais pas au-delà de 5%, de sorte que, pour la pression superficielle maintenant le raccord (6, 10), les forces élastiques maximales de rétention de toute la section du tube sont disponibles.

2. Robinet de tuyauterie selon la revendication 1, caractérisé en ce que, entre le raccord (6, 10) et l'extrémité du corps, une couche intermédiaire (11) isolante est prévue, en particulier sous forme d'une revêtement isolant électrique sur la surface externe du raccord (6, 10), ladite surface étant avantageusement cylindrique.

3. Robinet du tuyauterie selon les revendications 1 ou 2, caractérisé en ce qu'à des fins d'étanchéité, une bague d'élastomère (13) est insérée entre le raccord (6, 10) et la paroi interne du corps.

4. Robinet de tuyauterie selon la revendication 3, caractérisé en ce que la bague d'élastomère (13) assure également l'étanchéité vis-à-vis d'un organe de commande (2).